# EUROPÄISCHE PATENTSCHRIFT

(11) **EP 4 073 861 B1**
(45) Veröffentlichungstag und Bekanntmachung des Hinweises auf die Patenterteilung: **13.11.2024**
(21) Anmeldenummer: 20828252.5
(22) Anmeldetag: 09.12.2020
(51) Int. Cl.: H01M 8/04014, F28D 7/00, H01M 8/04007, H01M 8/04089

(54) **BRENNSTOFFZELLENSYSTEM**
FUEL CELL SYSTEM
SYSTÈME DE PILE À COMBUSTIBLE

(30) Priorität: 09.12.2019 AT 510782019
(43) Veröffentlichungstag der Anmeldung: 19.10.2022
(73) Patentinhaber: AVL List GmbH, 8020 Graz (AT)
(72) Erfinder: NEUBAUER, Raphael, 8042 Graz (AT); SOUKUP, Nikolaus, 22767 Hamburg (DE); LERCH, Matthias, 8020 Graz (AT); PÖSCHL, Robert, 8111 Judendorf-Straßengel (AT); MAKINSON, Julian, 8044 Graz (AT)
(74) Vertreter: Gamper, Bettina
(86) Internationale Anmeldenummer: PCT/AT2020/060438
(87) Internationale Veröffentlichungsnummer: WO 2021/113888

(56) Entgegenhaltungen:
- WO-A1-2012/105300
- DE-A1- 102011 078 115
- DE-A1- 102013 225 368

## Beschreibung

Die vorliegende Erfindung betrifft ein Brennstoffzellensystem, aufweisend wenigstens einen Brennstoffzellenstapel mit einem Anodenabschnitt und einem Kathodenabschnitt, einen Ejektor, eine Brennstoffgemischleitung zum Leiten eines Brennstoffgemisches, das Primärbrennstoff und Sekundärbrennstoff aufweist, vom Ejektor zum Anodenabschnitt, eine Primärbrennstoffleitung zum Zuführen des Primärbrennstoffs zum Ejektor, und eine Rezirkulationsleitung zum Rückführen des Sekundärbrennstoffs vom Anodenabschnitt zum Ejektor.

Bei gattungsgemäßen Brennstoffzellensystemen ist es bekannt, dass Brennstoff in Form eines Primärbrennstoffs mittels Ejektor in Richtung des Anodenabschnitts geleitet wird. Durch den Ejektor kann heißes Anodenabgas rezirkuliert werden, d.h., aus dem Anodenabschnitt in Form von Sekundärbrennstoff in den Ejektor und von dort zusammen mit dem Primärbrennstoff wieder zurück in den Anodenabschnitt geführt werden. Um möglichst hohe Rezirkulationsraten zu erzielen ist ein hoher Druck des Primärstroms von Vorteil. Ferner sollte der Primärbrennstoff möglichst vorgewärmt in den Anodenabschnitt geleitet werden. Hierzu geht aus der deutschen Patentanmeldung DE 41 37 968 A1 beispielsweise ein Brennstoffzellensystem mit Wärmetauscheinrichtungen zur Wärmeauskopplung aus einer Hochtemperaturbrennstoffzelle hervor, wobei die ausgekoppelte Wärme zur Vorwärmung eines Brennstoffes der Hochtemperaturbrennstoffzelle und zur Vorwärmung von Luft genutzt wird. Darüber hinaus sollte im Anodenpfad, also unter anderem in einer Primärbrennstoffleitung zum Zuführen des Primärbrennstoffs, der Druckverlust so klein wie möglich sein.

Ein weiteres gattungsgemäßes Brennstoffzellensystem ist beispielsweise aus WO 2012/105300 A1 bekannt.

Aufgabe der vorliegenden Erfindung ist es, der voranstehend beschriebenen Problematik zumindest teilweise Rechnung zu tragen. Insbesondere ist es Aufgabe der vorliegenden Erfindung, ein entsprechend verbessertes Brennstoffzellensystem zu schaffen, bei welchem der Primärbrennstoff bei möglichst konstantem und hohem Druck effektiv vorgewärmt werden kann.

Die voranstehende Aufgabe wird durch die Patentansprüche gelöst.

Insbesondere wird die voranstehende Aufgabe durch das Brennstoffzellensystem gemäß Anspruch 1 gelöst. Weitere Vorteile der Erfindung ergeben sich aus den Unteransprüchen, der Beschreibung und den Zeichnungen.

Gemäß einem ersten Aspekt der vorliegenden Erfindung wird ein Brennstoffzellensystem zur Verfügung gestellt. Das Brennstoffzellensystem weist wenigstens einen Brennstoffzellenstapel mit einem Anodenabschnitt und einem Kathodenabschnitt, einen Ejektor, eine Brennstoffgemischleitung zum Leiten eines Brennstoffgemisches, das Primärbrennstoff und Sekundärbrennstoff aufweist, vom Ejektor zum Anodenabschnitt, eine Primärbrennstoffleitung zum Zuführen des Primärbrennstoffs zum Ejektor, und eine Rezirkulationsleitung zum Rückführen des Sekundärbrennstoffs vom Anodenabschnitt zum Ejektor, auf. Die Primärbrennstoffleitung erstreckt sich für eine wärmeübertragende Verbindung zwischen dem Sekundärbrennstoff und dem Primärbrennstoff zumindest abschnittsweise durch ein Wärmetauschvolumen innerhalb der Rezirkulationsleitung. Der Ejektor weist in dem Brennstoffzellensystem gemäß der vorliegenden Erfindung eine Düse auf, wobei sich die Primärbrennstoffleitung innerhalb des Wärmetauschvolumens bis hin zur Düse erstreckt. Damit können der Druck in der Primärbrennstoffleitung und/oder der Druck des Primärbrennstoffs bis hin zur Düse wie gewünscht hoch gehalten werden.

In dem Bereich, in welchem sich die Primärbrennstoffleitung innerhalb der Rezirkulationsleitung und/oder durch das Wärmetauschvolumen erstreckt, sind die Primärbrennstoffleitung und die Rezirkulationsleitung jeweils vorzugweise rohrförmig ausgestaltet, wobei die Rohrform nicht zwangsweise einen kreisrunden Innen- und/oder Außendurchmesser aufweisen muss, sondern auch einen wenigstens teilweise eckigen und/oder nur teilweise runden Querschnitt aufweisen kann. Durch die Primärbrennstoffleitung, die sich durch das Wärmetauschvolumen der Rezirkulationsleitung erstreckt, kann das gewünschte Aufwärmen des Primärbrennstoffs einfach und effektiv realisiert werden. Über die Wandung der Primärbrennstoffleitung kann ein effektiver Wärmetransport von dem aufgeheizten, rezirkulierten Sekundärbrennstoff auf den aufzuheizenden Primärbrennstoff ermöglicht werden.

Durch das Führen des Primärbrennstoffs durch die Primärbrennstoffleitung innerhalb der Rezirkulationsleitung kann der Primärbrennstoff außerdem bei relativ hohem Druck aufgeheizt werden. D.h., der Primärbrennstoff und/oder ein entsprechender Primärbrennstoffstrom können mittels der erfindungsgemäßen Anordnung mit hohem Druck auf kleinem Bauraum effizient vorgewärmt werden, wobei auch komplexere Bauräume im Brennstoffzellensystem genutzt werden können.

Abhängig vom gewünschten Druck können der Durchmesser und/oder die Wandstärke der Primärbrennstoffleitung zumindest in einem Bereich innerhalb des Wärmetauschvolumens entsprechend ausgestaltet werden. Ein Druckverlust in einem Rezirkulationsstrom des Sekundärbrennstoffs kann trotzdem minimiert und/oder klein gehalten werden.

Die Rezirkulationsleitung kann vorliegend nicht nur zum Rückführen des Anodenabgases zum Ejektor, sondern auch zum Rückführen des Kathodenabgases zu wenigstens einem Funktionsbauteil des Brennstoffzellensystems konfiguriert sein. Das Wärmetauschvolumen ist deshalb nicht auf ein Volumen beschränkt, in welchem ausschließlich Anodenabgas geführt wird. Vielmehr können dort auch Kathodenabgas und/oder eine Anodenabgas/Kathodenabgas-Mischung geführt werden. Entscheidend ist, dass Abgas geführt wird, das zumindest zeitweise heißer als der Primärbrennstoff ist, sodass der gewünschte, positive Wärmetransport vom Wärmetauschvolumen auf die Primärbrennstoffleitung und von dort auf den darin geführten Primärbrennstoff ermöglicht werden kann.

Abhängig vom verwendeten Brennstoffzellensystem und/oder von gewünschten Anforderungen können die Geometrie der Primärbrennstoffleitung und/oder der Rezirkulationsleitung unterschiedlich ausgestaltet sein, ohne dass das Konzept und/oder die Auslegung des Brennstoffzellensystems entscheidend verändert werden müsste. Damit kann die erfindungsgemäße Lösung besonders flexibel an die jeweiligen Bedürfnisse und geometrischen Vorgaben im Brennstoffzellensystem angepasst werden.

Der Ejektor kann in Form einer Strahlpumpe ausgestaltet sein, in welcher eine Pumpwirkung durch einen Primärbrennstoffstrahl erzeugt wird, der durch Impulsaustausch das Sekundärfluid ansaugt, beschleunigt, verdichtet und/oder fördert. Da eine solche Pumpenart relativ einfach aufgebaut ist und keine oder kaum bewegende Teile aufweist, ist sie besonders robust, wartungsarm und vielseitig einsetzbar. Der Ejektor kann eine Düse, einen Saugabschnitt, eine Mischkammer und/oder einen Mischabschnitt sowie einen Diffusor aufweisen, wobei die Funktionsbauteile bevorzugt in der genannten Reihenfolge stromabwärts hintereinander ausgestaltet sind. Im Saugabschnitt kann der Sekundärbrennstoff durch den Primärbrennstoff angesaugt und in die Mischkammer gefördert werden.

Demnach kann eine leichte Durchmischung zwischen dem Primärbrennstoff und dem Sekundärbrennstoff zwar bereits im Saugabschnitt stattfinden, die eigentliche und/oder überwiegende Durchmischung findet allerdings im Mischabschnitt statt.

Die Primärbrennstoffleitung erstreckt sich vorzugsweise wenigstens über eine Länge im Wärmetauschvolumen, die einem Vielfachen eines Durchmessers der Primärbrennstoffleitung innerhalb des Wärmetauschvolumens entspricht. D.h., darunter, dass sich die Primärbrennstoffleitung durch das Wärmetauschvolumen erstreckt soll insbesondere verstanden werden, dass sich ein wesentlicher Teil der Primärbrennstoffleitung durch das Wärmetauschvolumen erstreckt und beispielsweise nicht nur ein kleiner Teil, der nur ein wenig in ein Wärmetauschvolumen ragt und dadurch keine oder nur eine unmerkliche wärmetauschende Verbindung zwischen dem Primärbrennstoff und dem Sekundärbrennstoff zulässt.

Unter dem Wärmetauschvolumen ist insbesondere ein Innenvolumen der Rezirkulationsleitung und/oder ein Volumen innerhalb der Rezirkulationsleitung in einem Bereich der Rezirkulationsleitung, in welchem sich die Primärbrennstoffleitung durch das Wärmetauschvolumen innerhalb der Rezirkulationsleitung erstreckt, zu verstehen. Das Brennstoffzellensystem ist bevorzugt in Form eines SOFC-System konfiguriert, in welchem stromabwärts des Ejektors und stromaufwärts des Anodenabschnitts ein Reformer angeordnet sein kann.

Unter dem Primärbrennstoff und/oder dem Sekundärbrennstoff kann insbesondere ein wasserstoff- und/oder kohlenwasserstoffhaltiges Fluid verstanden werden, wobei der Wasserstoff- und/oder Kohlenwasserstoffanteil im Primärbrennstoff vorzugsweise größer als im Sekundärbrennstoff ist.

Gemäß einer weiteren Ausführungsform der vorliegenden Erfindung ist es möglich, dass bei einem Brennstoffzellensystem die Primärbrennstoffleitung innerhalb des Wärmetauschvolumens zumindest abschnittsweise mäanderförmig und/oder gekrümmt ausgestaltet ist. Dadurch ist es möglich, über das verfügbare Wärmetauschvolumen innerhalb der Rezirkulationsleitung und/oder dessen Länge eine relativ große Oberfläche für den gewünschten Wärmetransport vom Sekundärbrennstoff auf den Primärbrennstoff zu schaffen.

Von besonderem Vorteil kann es sein, wenn die Primärbrennstoffleitung innerhalb des Wärmetauschvolumens zumindest abschnittsweise spiralförmig ausgestaltet ist. Durch diesen mäanderförmigen, dreidimensionalen Primärbrennstoffleitungsabschnitt kann eine große Wärmetauschoberfläche geschaffen werden, während gleichzeitig ein relativ widerstandsarmer Fluidkanal für den Primärbrennstoff ermöglicht werden kann. Unter der Mäanderform kann auch eine Wellenform verstanden werden. Die Mäanderform kann gleichmäßig oder ungleichmäßig ausgestaltet sein. D.h., die Kurvenradien und/oder Durchmesser der Bögen müssen nicht gleich zueinander sein. So ist es auch möglich, dass die Primärbrennstoffleitung innerhalb des Wärmetauschvolumens zumindest abschnittsweise mäanderförmig und in sich verschlungen, in einer Ebene und/oder im dreidimensionalen Raum, ausgestaltet ist. Auch damit lässt sich eine relativ große Primärbrennstoffleitungsoberfläche innerhalb des Wärmetauschvolumens für die gewünschte wärmeübertragende Verbindung zwischen dem Sekundärbrennstoff und dem Primärbrennstoff schaffen.

Ferner ist es möglich, dass bei einem erfindungsgemäßen Brennstoffzellensystem die Primärbrennstoffleitung einen ersten Primärbrennstoffleitabschnitt und einen zweiten Primärbrennstoffleitabschnitt aufweist, wobei der erste Primärbrennstoffleitabschnitt und der zweite Primärbrennstoffleitabschnitt zum parallelen Führen und/oder Leiten des Primärbrennstoffs innerhalb der wenigstens zwei Primärbrennstoffleitabschnitte im Wärmetauschvolumen ausgestaltet sind. Dadurch kann eine relativ große Oberfläche der Primärbrennstoffleitung innerhalb des Wärmetauschvolumens realisiert werden, wodurch wiederum ein entsprechend wirkungsvoller Wärmetransport von dem Sekundärbrennstoff auf den Primärbrennstoff erreicht werden kann. Der erste Primärbrennstoffleitabschnitt und der zweite und/oder wenigstens eine weitere Primärbrennstoffleitabschnitt können zumindest abschnittsweise parallel zueinander ausgestaltet sein und/oder sich zumindest abschnittsweise parallel zueinander durch das Wärmetauschvolumen erstrecken. Beide Primärbrennstoffleitabschnitte können gerade oder mäanderförmig, insbesondere spiralförmig, ausgestaltet sein. Besonders vorteilhaft können der erste Primärbrennstoffleitabschnitt und der zweite Primärbrennstoffleitabschnitt zumindest abschnittsweise jeweils spiralförmig, insbesondere doppelhelixförmig, durch das Wärmetauschvolumen erstrecken.

Unter dem parallelen Führen kann ein Führen und/oder Leiten des Primärbrennstoffs nebeneinander in voneinander beabstandeten Primärbrennstoffleitungsabschnitten verstanden werden. Die Primärbrennstoffleitung kann mithin wenigstens einen Gabelabschnitt aufweisen, in welchem sich die Primärbrennstoffleitung in den ersten Primärbrennstoffleitabschnitt und den zweiten und/oder wenigstens einen weiteren Primärbrennstoffleitabschnitt verzweigt.

Darüber hinaus kann es bei einem Brennstoffzellensystem gemäß der vorliegenden Erfindung von Vorteil sein, wenn die Primärbrennstoffleitung zumindest in einem Bereich des Wärmetauschvolumens einen um ein Vielfaches kleineren Leitungsdurchmesser als die Rezirkulationsleitung in diesem Bereich aufweist. Dadurch kann der Druck in der Primärbrennstoffleitung auf einfache Weise auf einen gewünschten Wert eingestellt werden. Zudem kann dadurch der Strömungswiederstand in der Rezirkulationsleitung gering gehalten werden. Bei umfangreichen experimentellen Versuchen im Rahmen der vorliegenden Erfindung hat es sich mit Bezug auf die vorstehend erwähnten Aspekte als besonders vorteilhaft herausgestellt, wenn der Durchmesser einer rohrförmigen Primärbrennstoffleitung zumindest in dem Bereich, in welchem sich die Primärbrennstoffleitung, beispielsweise zumindest abschnittsweise koaxial, durch das Wärmetauschvolumen einer rohrförmigen Rezirkulationsleitung erstreckt, einen Wert in einem Bereich zwischen 5% und 25% des Durchmessers der rohrförmigen Rezirkulationsleitung aufweist.

Gemäß einer weiteren Ausgestaltungsvariante der vorliegenden Erfindung ist es möglich, dass bei einem Brennstoffzellensystem die Primärbrennstoffleitung innerhalb des Wärmetauschvolumens einen Gegenleitabschnitt zum Leiten des Primärbrennstoffs in eine Gegenströmungsrichtung, die entgegengesetzt oder im Wesentlichen entgegengesetzt zu einer Strömungsrichtung des Sekundärbrennstoffs im Wärmetauschvolumen ist, aufweist. D.h., die Primärbrennstoffleitung, beispielsweise in Form einer Rohrwendel oder Spirale, kann in einem Gegenstrom zum Abgasstrom, insbesondere zum Sekundärbrennstoffstrom, geführt werden. Dies hat den Vorteil, dass die Wärmeübertragungsfläche, die durch die Wandung der Primärbrennstoffleitung gebildet wird, stets den heißen Sekundärbrennstoffstrom erreicht. Der Gegenleitabschnitt kann erfindungsgemäß zumindest abschnittsweise spiralförmig ausgestaltet sein.

Dies resultiert in einer vergrößerten Wärmeübertragungsfläche und einem entsprechend wirkungsvollen Wärmetausch zwischen dem Sekundärbrennstoff und dem Primärbrennstoff. Die Spiralform der Primärbrennstoffleitung kann sich im Gegenleitabschnitt in Gegenstromrichtung, also in einer Richtung entgegengesetzt zu einer Sekundärbrennstoffflussrichtung, verjüngen oder verbreitern. D.h., die Windungen der Spiralform können nacheinander einen kleineren oder größeren Krümmungsradius und/oder Durchmesser aufweisen. Mit anderen Worten kann eine Amplitude der in einer Seitenansicht betrachtet wellenförmig aussehenden Spiralform in Gegenstromrichtung von Kurve zu Kurve und/oder von Welle zu Welle zumindest über einen Teilabschnitt der Primärbrennstoffleitung in Gegenstromrichtung jeweils kleiner oder größer werden.

Bei einem erfindungsgemäßen Brennstoffzellensystem kann es zudem von Vorteil sein, wenn die Rezirkulationsleitung eine Rezirkulationsleitungswandung aufweist, in welcher eine erste Eintrittsöffnung, durch welche die Primärbrennstoffleitung in das Wärmetauschvolumen eintritt, eine Austrittsöffnung, durch welche die Primärbrennstoffleitung wieder aus dem Wärmetauschvolumen in die Umgebung der Rezirkulationsleitung austritt, und eine zweite Eintrittsöffnung, durch welche die Primärbrennstoffleitung wieder in das Wärmetauschvolumen eintritt, ausgestaltet sind. Damit kann die Primärbrennstoffleitung an verschiedene Geometrien von unterschiedlichen Brennstoffzellensystemen sowie an unterschiedliche Wünsche hinsichtlich der Temperierung des Primärbrennstoffs durch den Sekundärbrennstoff flexibel angepasst werden.

Ferner kann sich bei einem Brennstoffzellensystem gemäß der vorliegenden Erfindung die Primärbrennstoffleitung stromabwärts der Austrittsöffnung und stromaufwärts der zweiten Eintrittsöffnung zumindest abschnittsweise in Flächenkontakt mit einer Außenumfangsfläche an der Außenumfangsfläche der Rezirkulationsleitungswandung entlang erstrecken.

D.h., die Primärbrennstoffleitung kann sich an einer Außenwandung der Rezirkulationsleitung mit annähernd dem Innenradius und/oder dem Außenradius der Rezirkulationsleitung erstrecken. Wenn die Primärbrennstoffleitung in einem Kurvenabschnitt der Rezirkulationsleitung ausgestaltet ist, kann ein Strömungswiderstand in der Rezirkulationsleitung relativ niedrig gehalten werden, d.h., der Druckverlust in der Rezirkulationsleitung kann minimiert und/oder entsprechend niedrig gehalten werden. Die Primärbrennstoffleitung ist hierbei vorzugsweise sichelförmig oder halbmondförmig ausgestaltet, wobei eine gebogene Seitenfläche der Primärbrennstoffleitung komplementär und/oder korrespondierend zu einer entsprechend gebogenen Außenumfangsfläche der Rezirkulationsleitung ausgestaltet ist.

Die Rezirkulationsleitung kann in einem Brennstoffzellensystem gemäß der vorliegenden Erfindung einen Krümmerabschnitt aufweisen, wobei sich die Primärbrennstoffleitung zumindest teilweise durch das Wärmetauschvolumen im Krümmerabschnitt erstreckt. Dadurch kann für die Primärbrennstoffleitung ein relativ langer Wärmetauschbereich geschaffen werden, in welchem die Primärbrennstoffleitung, insbesondere bei mäander- und/oder spiralförmiger Ausgestaltung, mit einer relativ großen Gesamtaußenwandfläche für einen wirkungsvollen Wärmetransport vom Sekundärbrennstoff auf den Primärbrennstoff ausgestaltet werden und/oder sein kann. Unter dem Krümmerabschnitt kann ein Abschnitt der Rezirkulationsleitung verstanden werden, welcher sich wenigstens einmal um wenigstens 30°, insbesondere um wenigstens 90° und bevorzugt in einem Bereich zwischen 170° und 190°, krümmt.

Das erfindungsgemäße Brennstoffzellensystem wird insbesondere zumindest teilweise additiv gefertigt, beispielsweise durch 3-D-Druck. Insbesondere wird zumindest das Wärmetauschervolumen mit den verschiedenen Leitungen durch 3-D-Druck hergestellt.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind.

Es zeigen jeweils schematisch:
- Figur 1: ein Blockschaltbild zum Beschreiben eines Brennstoffzellensystems gemäß einer bevorzugten Ausführungsform der vorliegenden Erfindung,
- Figur 2: eine perspektivische Ansicht einer Leitungsanordnung gemäß einer ersten Ausführungsform der vorliegenden Erfindung,
- Figur 3: eine Seitenansicht einer Leitungsanordnung gemäß einer zweiten Ausführungsform der vorliegenden Erfindung,
- Figur 4: eine Seitenansicht einer Leitungsanordnung gemäß einer dritten Ausführungsform der vorliegenden Erfindung,
- Figur 5: eine Seitenansicht einer Leitungsanordnung gemäß einer vierten Ausführungsform der vorliegenden Erfindung,
- Figur 6: eine Seitenansicht einer Leitungsanordnung gemäß einer fünften Ausführungsform der vorliegenden Erfindung,
- Figur 7: eine Seitenansicht einer Leitungsanordnung gemäß einer sechsten Ausführungsform der vorliegenden Erfindung,
- Figur 8: geschnittene Vorderansichten gemäß der sechsten Ausführungsform der vorliegenden Erfindung mit unterschiedlichen Leitungsgeometrien der Primärbrennstoffleitung,
- Figur 9: eine Seitenansicht einer Leitungsanordnung gemäß einer siebten Ausführungsform der vorliegenden Erfindung,
- Figur 10: geschnittene Vorderansichten gemäß der siebten Ausführungsform der vorliegenden Erfindung mit unterschiedlichen Leitungsgeometrien der Primärbrennstoffleitung,
- Figur 11: eine Seitenansicht einer Leitungsanordnung gemäß einer achten Ausführungsform der vorliegenden Erfindung,
- Figur 12: eine Seitenansicht einer Leitungsanordnung gemäß einer neunten Ausführungsform der vorliegenden Erfindung, und
- Figur 13: eine Seitenansicht einer Leitungsanordnung gemäß einer zehnten Ausführungsform der vorliegenden Erfindung.

Elemente mit gleicher Funktion und Wirkungsweise sind in den Figuren jeweils mit den gleichen Bezugszeichen versehen.

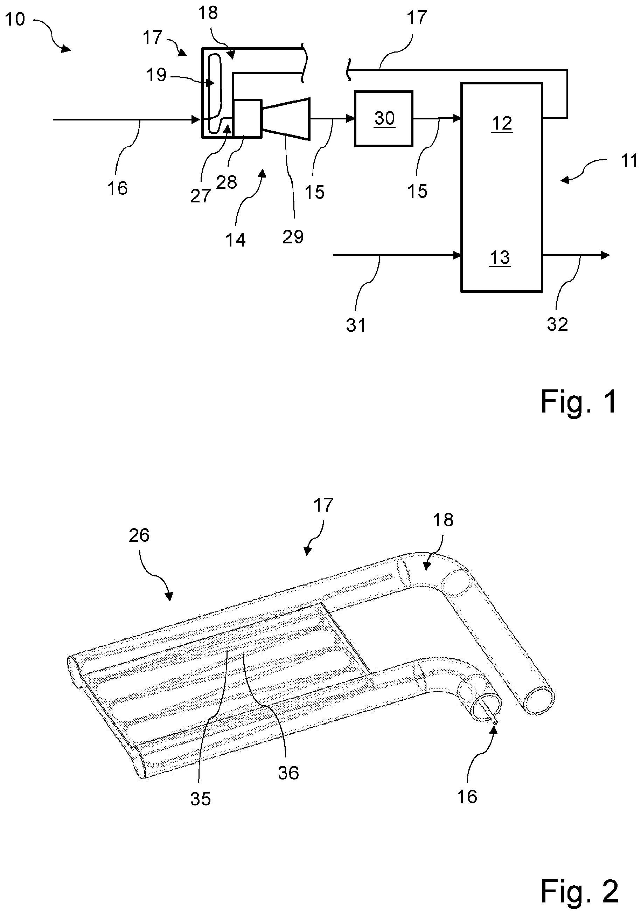

Fig. 1 zeigt ein Brennstoffzellensystem 10 in Form eines SOFC-Systems gemäß einer bevorzugten Ausführungsform. Das in Fig. 1 dargestellte Brennstoffzellensystem 10 weist einen Brennstoffzellenstapel 11 mit einem Anodenabschnitt 12 und einem Kathodenabschnitt 13, einen Ejektor 14, eine Brennstoffgemischleitung 15 zum Leiten eines Brennstoffgemisches, das Primärbrennstoff und Sekundärbrennstoff aufweist, vom Ejektor 14 zum Anodenabschnitt 12, eine Primärbrennstoffleitung 16 zum Zuführen des Primärbrennstoffs zum Ejektor 14, und eine Rezirkulationsleitung 17 zum Rückführen des Sekundärbrennstoffs vom Anodenabschnitt 12 zum Ejektor 14, auf. Das gezeigte Brennstoffzellensystem 10 weist ferner eine Kathodengaszuführleitung 31 zum Zuführen von Kathodengas, insbesondere in Form von Luft, zum Kathodenabschnitt 13, und eine Kathodenabgasleitung 32 zum Leiten von Kathodenabgas aus dem Kathodenabschnitt 13, auf. Die Primärbrennstoffleitung 16 erstreckt sich für eine wärmeübertragende Verbindung zwischen dem Sekundärbrennstoff und dem Primärbrennstoff und/oder für eine wärmeübertragende Verbindung zwischen dem Sekundärbrennstoff, einer Wandung der Primärbrennstoffleitung 16 und damit dem Primärbrennstoff abschnittsweise durch ein Wärmetauschvolumen 18 innerhalb der Rezirkulationsleitung 17.

Der in Fig. 1 dargestellte Ejektor 14 weist einen Saugdüsenabschnitt 27, eine stromabwärts des Saugdüsenabschnitts 27 gebildete Mischkammer 28 und einen stromabwärts der Mischkammer 28 ausgestalteten Diffusor 29 auf. Stromabwärts des Ejektors 14 und stromaufwärts des Anodenabschnitts 12 ist ein Reformer 30 zum Reformieren des Brennstoffgemisches aus der Brennstoffgemischleitung 15 für die Verwendung als Anodengas im Anodenabschnitt 12 positioniert. Die Primärbrennstoffleitung 16 weist innerhalb des Wärmetauschvolumens 18 der Rezirkulationsleitung 17 einen Gegenleitabschnitt 19 auf.

In Fig. 2 ist eine Leitungsanordnung gemäß einer ersten, konkreten Ausführungsform dargestellt. Bei der dargestellten Leitungsanordnung kann erkannt werden, dass die Primärbrennstoffleitung 16 innerhalb des Wärmetauschvolumens 18 abschnittsweise mäanderförmig gekrümmt ausgestaltet ist. Die in Fig. 2 gezeigte Primärbrennstoffleitung 16 weist einen ersten Primärbrennstoffleitabschnitt 35 und einen zweiten Primärbrennstoffleitabschnitt 36 auf, wobei der erste Primärbrennstoffleitabschnitt 35 und der zweite Primärbrennstoffleitabschnitt 36 zum parallelen Führen des Primärbrennstoffs innerhalb der beiden Primärbrennstoffleitabschnitte 35, 36 im Wärmetauschvolumen 18 ausgestaltet sind. Mit Blick auf Fig. 2 kann ferner erkannt werden, dass die Primärbrennstoffleitung 16 im Bereich des Wärmetauschvolumens 18 einen um ein Vielfaches kleineren Leitungsdurchmesser als die Rezirkulationsleitung 17 in diesem Bereich aufweist.

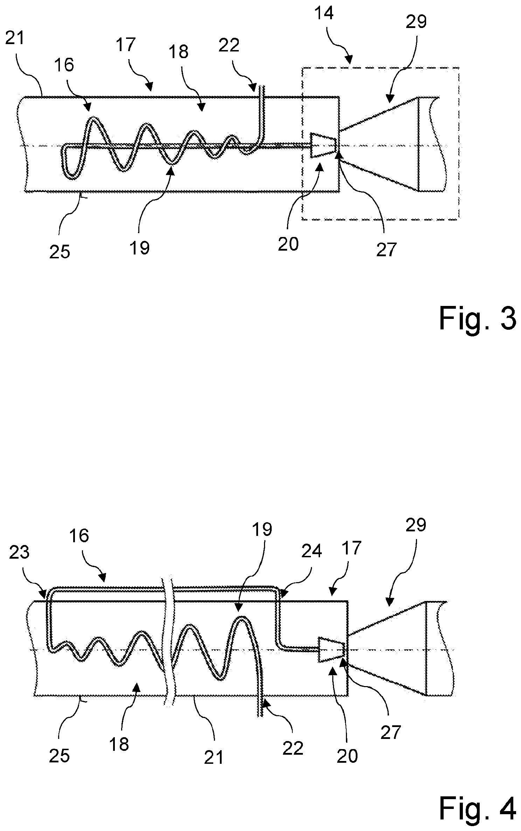

Fig. 3 zeigt eine Seitenansicht zum Erläutern einer Leitungsanordnung gemäß einer zweiten Ausführungsform. Bei der in Fig. 3 dargestellten Leitungsanordnung weist die Primärbrennstoffleitung 16 innerhalb des Wärmetauschvolumens 18 einen Gegenleitabschnitt 19 zum Leiten des Primärbrennstoffs in eine Gegenströmungsrichtung, die entgegengesetzt zu einer Strömungsrichtung des Sekundärbrennstoffs im Wärmetauschvolumen 18 ist, auf. Der in Fig. 3 gezeigte Gegenleitabschnitt 19 ist im Wesentlichen spiralförmig ausgestaltet, wobei sich die Spiralform und/oder der Windungsdurchmesser der Spiralform in Gegenströmungsrichtung kontinuierlich vergrößert. Ein an die Spiralform anschließender Abschnitt der Primärbrennstoffleitung 16 führt in Strömungsrichtung des Sekundärbrennstoffs gerade, insbesondere mittig und/oder entlang einer zentralen Spiralformachse, durch den Gegenleitabschnitt 19 und/oder die Spiralform des Gegenleitabschnitts 19. Die Primärbrennstoffleitung 16, genauer gesagt der an die Spiralform anschließende Abschnitt der Primärbrennstoffleitung 16 erstreckt sich gemäß der zweiten Ausführungsform innerhalb des Wärmetauschvolumens 18 bis hin zur Düse 20 des Ejektors 14.

Fig. 4 zeigt eine Leitungsanordnung gemäß einer dritten Ausführungsform. Bei der in Fig. 4 dargestellten Leitungsanordnung umfasst die Rezirkulationsleitung 17 eine Rezirkulationsleitungswandung 21, in welcher eine erste Eintrittsöffnung 22, durch welche die Primärbrennstoffleitung 16 in das Wärmetauschvolumen 18 eintritt, eine Austrittsöffnung 23, durch welche die Primärbrennstoffleitung 16 wieder aus dem Wärmetauschvolumen 18 in die Umgebung der Rezirkulationsleitung 17 austritt, und eine zweite Eintrittsöffnung 24, durch welche die Primärbrennstoffleitung 16 wieder in das Wärmetauschvolumen 18 eintritt, bevor sich die Primärbrennstoffleitung 16 innerhalb des Wärmetauschvolumens 18 bis hin zur Düse 20 des Ejektors 14 erstreckt. In einem Leitungsabschnitt der Primärbrennstoffleitung 16 zwischen der Austrittsöffnung 23 und der zweiten Eintrittsöffnung 24 erstreckt sich die Primärbrennstoffleitung 16 im Wesentlichen gerade und parallel zur Außenumfangsfläche 25 und damit auch zur Rezirkulationsleitungswandung 21 der Rezirkulationsleitung 17.

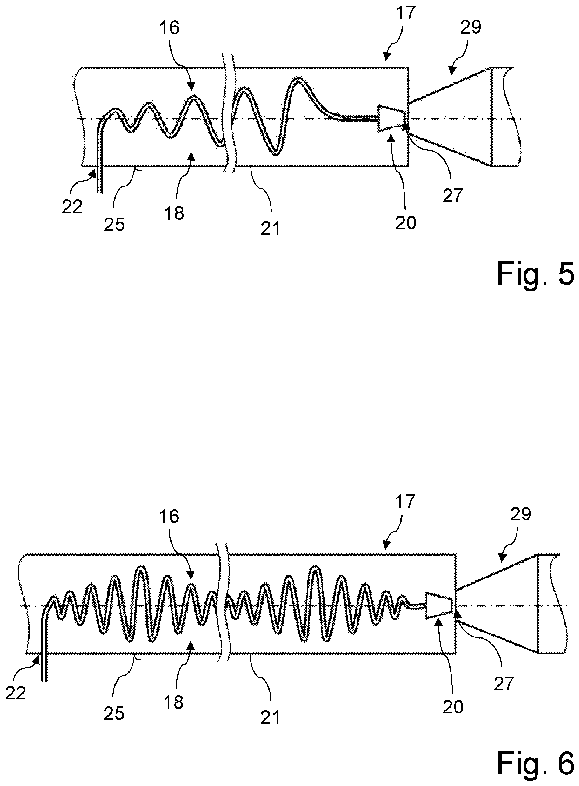

Fig. 5 zeigt eine Leitungsanordnung gemäß einer vierten Ausführungsform, bei welcher sich eine spiralförmig ausgestaltete Primärbrennstoffleitung 16 zum Leiten des Primärbrennstoffs in Strömungsrichtung des Sekundärbrennstoffs in derselben Richtung vergrößert. D.h., der Durchmesser der Spiralform weitet sich in Strömungsrichtung des Sekundärbrennstoffs auf. Bei der in Fig. 6 gezeigten Leitungsanordnung gemäß einer fünften Ausführungsform vergrößert und verkleinert sich der Durchmesser der Spiralform in Strömungsrichtung abwechselnd wiederholend nacheinander.

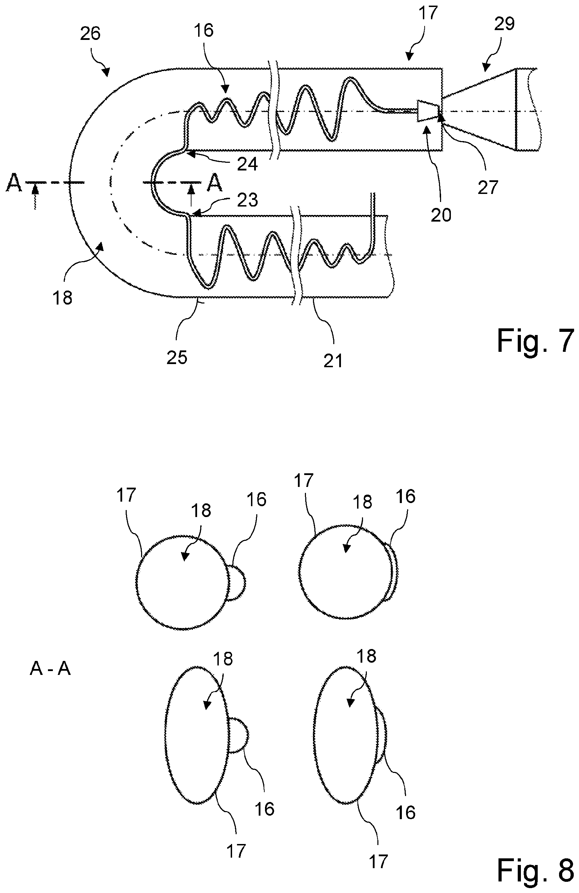

In Fig. 7 ist eine Leitungsanordnung gemäß einer sechsten Ausführungsform dargestellt, bei welcher sich die Primärbrennstoffleitung 16 stromabwärts der Austrittsöffnung 23 und stromaufwärts der zweiten Eintrittsöffnung 24 in Flächenkontakt mit der Außenumfangsfläche 25 der Rezirkulationsleitungswandung 21 an dieser Außenumfangsfläche 25 entlang erstreckt. Genauer gesagt erstreckt sich die Primärbrennstoffleitung 16 um ca. 180° entlang an einem inneren Krümmungsabschnitt der Rezirkulationsleitung 17. In Fig. 8 sind mit Bezug auf das in Fig. 7 gezeigte, aber nicht darauf beschränkte, Beispiel unterschiedliche Ausführungsformen der Primärbrennstoffleitung 16 dargestellt. Wie in Fig. 8 zu erkennen, kann die Primärbrennstoffleitung 16 in einem Abschnitt, in welchem sie sich entlang der Außenumfangsfläche 25 der Rezirkulationsleitungswandung 21 erstreckt, abschnittsweise komplementär zur Außenumfangsfläche 25 und entsprechend teilweise flächenbündig sichelförmig ausgestaltet sein, sodass weiterhin ein möglichst wirkungsvoller Wärmetransport von dem heißen Sekundärbrennstoff auf den aufzuwärmenden Primärbrennstoff realisiert werden kann.

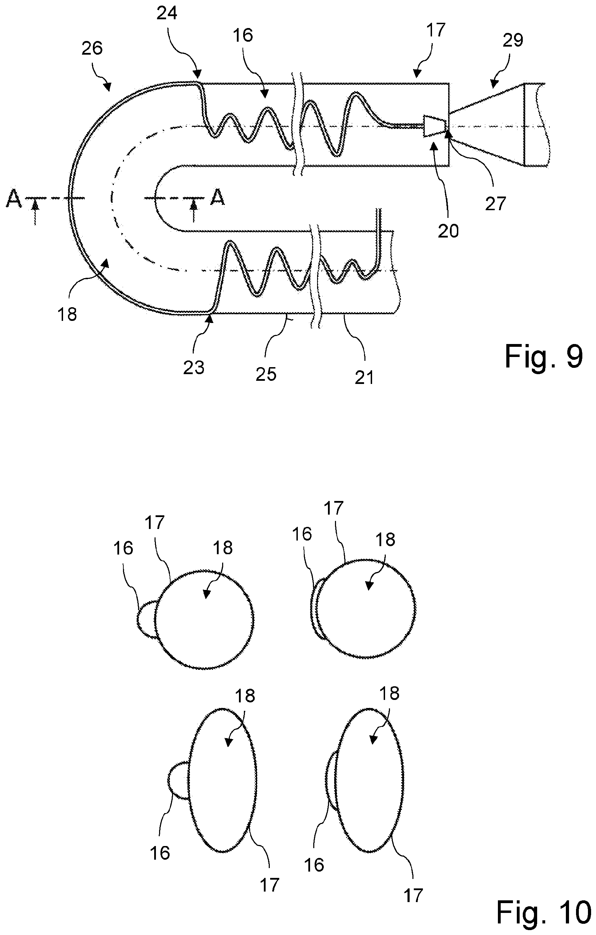

In Fig. 9 ist eine Leitungsanordnung gemäß einer siebten Ausführungsform dargestellt, bei welcher sich die Primärbrennstoffleitung 16 stromabwärts der Austrittsöffnung 23 und stromaufwärts der zweiten Eintrittsöffnung 24 um ca. 180° entlang an einem äußeren Krümmungsabschnitt der Rezirkulationsleitung 17 erstreckt. In Fig. 10 sind mit Bezug auf das in Fig. 9 gezeigte, aber nicht darauf beschränkte, Beispiel unterschiedliche Ausführungsformen der Primärbrennstoffleitung 16 dargestellt. Wie in Fig. 10 zu erkennen, kann die Primärbrennstoffleitung 16 in einem Abschnitt, in welchem sie sich entlang der Außenumfangsfläche 25 der Rezirkulationsleitungswandung 21 erstreckt, abschnittsweise komplementär zur Außenumfangsfläche 25 und entsprechend teilweise flächenbündig sichelförmig ausgestaltet sein, sodass weiterhin ein möglichst wirkungsvoller Wärmetransport von dem heißen Sekundärbrennstoff auf den aufzuwärmenden Primärbrennstoff realisiert werden kann. An dieser Stelle sei anzumerken, dass eine wie in Fig. 8 und Fig. 10 gezeigte, im Querschnitt zumindest abschnittsweise sichelförmige Primärbrennstoffleitung 16 auch in anderen Bereichen der Rezirkulationsleitung 17, also nicht nur in einem Krümmerabschnitt 26, sondern auch an einem gerade verlaufenden Abschnitt, außerhalb des Wärmetauschvolumens 18 teilweise entlang der Außenumfangsfläche 25 an der Rezirkulationsleitungswandung 21 ausgestaltet sein kann.

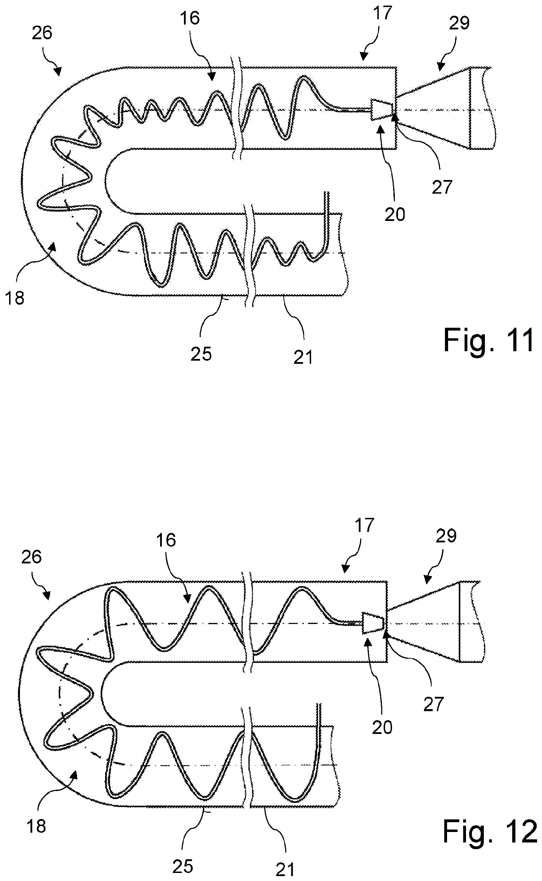

In Fig. 11 ist eine Leitungsanordnung gemäß einer achten Ausführungsform dargestellt, bei welcher sich die Primärbrennstoffleitung 16 in einer ungleichmäßigen Spiralform durch das Wärmetauschvolumen 18 im Krümmerabschnitt 26 bis hin zur Düse 20 erstreckt. Bei der in Fig. 12 gezeigten Leitungsanordnung gemäß einer neunten Ausführungsform weist die Spiralform einen größeren Durchmesser und/oder einen Windungsabschnitt mit einem größeren Durchmesser auf, wobei der Durchmesser der Spiralform annähernd dem Durchmesser der Rezirkulationsleitung entspricht. Genauer gesagt beträgt der mittlere Durchmesser der Spiralform mehr als 90% des Durchmessers der Rezirkulationsleitung 17 und/oder des dadurch umfassten Wärmetauschvolumens 18.

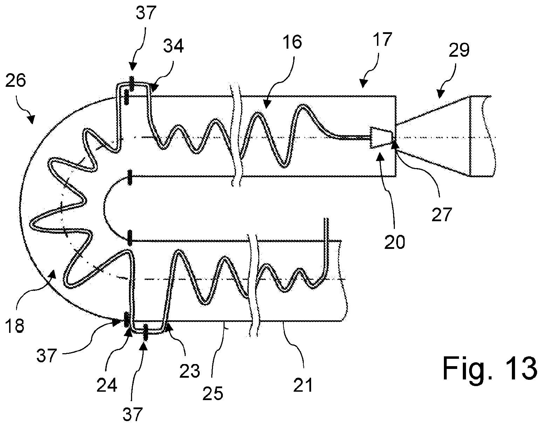

Bei der in Fig. 13 gezeigten Leitungsanordnung gemäß einer zehnten Ausführungsform weist die Rezirkulationsleitungswandung 21 eine erste Eintrittsöffnung 22, durch welche die Primärbrennstoffleitung 16 in das Wärmetauschvolumen 18 eintritt, eine Austrittsöffnung 23, durch welche die Primärbrennstoffleitung 16 wieder aus dem Wärmetauschvolumen 18 in die Umgebung der Rezirkulationsleitung 17 austritt, eine zweite Eintrittsöffnung 24, durch welche die Primärbrennstoffleitung 16 wieder in das Wärmetauschvolumen 18 eintritt, eine zweite Austrittsöffnung 33, durch welche die Primärbrennstoffleitung 16 wieder aus dem Wärmetauschvolumen 18 in die Umgebung der Rezirkulationsleitung 17 austritt und eine dritte Eintrittsöffnung 34, durch welche die Primärbrennstoffleitung 16 wieder in das Wärmetauschvolumen 18 eintritt, auf. Zwischen der ersten Austrittsöffnung 23 und der zweiten Eintrittsöffnung 24 sowie zwischen der zweiten Austrittsöffnung 33 und der dritten Eintrittsöffnung 34 weist die Leitungsanordnung Verbindungsstellen 37, gemäß Fig. 13 in Form von nicht darauf beschränkt zu betrachtende Schweißstellen, auf, an welchen die Primärbrennstoffleitung 16 und die Rezirkulationsleitung 17 miteinander verbunden, vorliegend verschweißt, und/oder verbindbar sind.

Die Erfindung lässt neben den dargestellten Ausführungsformen weitere Gestaltungsgrundsätze zu. D. h. die Erfindung soll nicht auf die mit Bezug auf die Figuren erläuterten Ausführungsbeispiele beschränkt betrachtet werden.

### Bezugszeichenliste

- 10: Brennstoffzellensystem
- 11: Brennstoffzellenstapel
- 12: Anodenabschnitt
- 13: Kathodenabschnitt
- 14: Ejektor
- 15: Brennstoffgemischleitung
- 16: Primärbrennstoffleitung
- 17: Rezirkulationsleitung
- 18: Wärmetauschvolumen
- 19: Gegenleitabschnitt
- 20: Düse
- 21: Rezirkulationsleitungswandung
- 22: erste Eintrittsöffnung
- 23: Austrittsöffnung
- 24: zweite Eintrittsöffnung
- 25: Außenumfangsfläche
- 26: Krümmerabschnitt
- 27: Saugdüsenabschnitt
- 28: Mischkammer
- 29: Diffusor
- 30: Reformer
- 31: Kathodengaszuführleitung
- 32: Kathodenabgasleitung
- 33: zweite Austrittsöffnung
- 34: dritte Eintrittsöffnung
- 35: erster Primärbrennstoffleitabschnitt
- 36: zweiter Primärbrennstoffleitabschnitt
- 37: Verbindungsstelle

## Patentansprüche

1. Brennstoffzellensystem (10), aufweisend wenigstens einen Brennstoffzellenstapel (11) mit einem Anodenabschnitt (12) und einem Kathodenabschnitt (13), einen Ejektor (14), eine Brennstoffgemischleitung (15) zum Leiten eines Brennstoffgemisches, das Primärbrennstoff und Sekundärbrennstoff aufweist, vom Ejektor (14) zum Anodenabschnitt (12), eine Primärbrennstoffleitung (16) zum Zuführen des Primärbrennstoffs zum Ejektor (14), und eine Rezirkulationsleitung (17) zum Rückführen des Sekundärbrennstoffs vom Anodenabschnitt (16) zum Ejektor (14),
**dadurch gekennzeichnet, dass**
sich die Primärbrennstoffleitung (16) für eine wärmeübertragende Verbindung zwischen dem Sekundärbrennstoff und dem Primärbrennstoff zumindest abschnittsweise durch ein Wärmetauschvolumen (18) innerhalb der Rezirkulationsleitung (17) erstreckt, wobei der Ejektor (14) eine Düse (20) aufweist und sich die Primärbrennstoffleitung (16) innerhalb des Wärmetauschvolumens (18) bis zur Düse (20) erstreckt.

2. Brennstoffzellensystem (10) nach Anspruch 1,
**dadurch gekennzeichnet, dass**
die Primärbrennstoffleitung (16) innerhalb des Wärmetauschvolumens (18) zumindest abschnittsweise mäanderförmig und/oder gekrümmt ausgestaltet ist.

3. Brennstoffzellensystem (10) nach einem der voranstehenden Ansprüche,
**dadurch gekennzeichnet, dass**
die Primärbrennstoffleitung (16) einen ersten Primärbrennstoffleitabschnitt (35) und einen zweiten Primärbrennstoffleitabschnitt (36) aufweist, wobei der erste Primärbrennstoffleitabschnitt (35) und der zweite Primärbrennstoffleitabschnitt (36) zum parallelen Führen des Primärbrennstoffs innerhalb der wenigstens zwei Primärbrennstoffleitabschnitte (35, 36) im Wärmetauschvolumen (18) ausgestaltet sind.

4. Brennstoffzellensystem (10) nach einem der voranstehenden Ansprüche, **dadurch gekennzeichnet, dass**
die Primärbrennstoffleitung (16) zumindest in einem Bereich des Wärmetauschvolumens (18) einen um ein Vielfaches kleineren Leitungsdurchmesser als die Rezirkulationsleitung (17) in diesem Bereich aufweist.

5. Brennstoffzellensystem (10) nach einem der voranstehenden Ansprüche, **dadurch gekennzeichnet, dass**
die Primärbrennstoffleitung (16) innerhalb des Wärmetauschvolumens (18) einen Gegenleitabschnitt (19) zum Leiten des Primärbrennstoffs in eine Gegenströmungsrichtung, die entgegengesetzt oder im Wesentlichen entgegengesetzt zu einer Strömungsrichtung des Sekundärbrennstoffs im Wärmetauschvolumen (18) ist, aufweist.

6. Brennstoffzellensystem (10) nach Anspruch 5,
**dadurch gekennzeichnet, dass**
der Gegenleitabschnitt (19) zumindest abschnittsweise spiralförmig ausgestaltet ist.

7. Brennstoffzellensystem (10) nach einem der voranstehenden Ansprüche, **dadurch gekennzeichnet, dass**
die Rezirkulationsleitung (17) eine Rezirkulationsleitungswandung (21) aufweist, in welcher eine erste Eintrittsöffnung (22), durch welche die Primärbrennstoffleitung (16) in das Wärmetauschvolumen (18) eintritt, eine Austrittsöffnung (23), durch welche die Primärbrennstoffleitung (16) wieder aus dem Wärmetauschvolumen (18) in die Umgebung der Rezirkulationsleitung (17) austritt, und eine zweite Eintrittsöffnung (24), durch welche die Primärbrennstoffleitung (16) wieder in das Wärmetauschvolumen (18) eintritt, ausgestaltet sind.

8. Brennstoffzellensystem (10) nach Anspruch 7,
**dadurch gekennzeichnet, dass**
sich die Primärbrennstoffleitung (16) stromabwärts der Austrittsöffnung (23) und stromaufwärts der zweiten Eintrittsöffnung (24) zumindest abschnittsweise in Flächenkontakt an einer Außenumfangsfläche (25) der Rezirkulationsleitungswandung (21) entlang erstreckt.

9. Brennstoffzellensystem (10) nach einem der Ansprüche 7 bis 8,
**dadurch gekennzeichnet, dass**
die Rezirkulationsleitung (17) einen Krümmerabschnitt (26) aufweist und sich die Primärbrennstoffleitung (16) zumindest teilweise durch das Wärmetauschvolumen (18) im Krümmerabschnitt (26) erstreckt.

## Claims

1. Fuel cell system (10) comprising at least one fuel cell stack (11) having an anode section (12) and a cathode section (13), an ejector (14), a fuel mixture conduit (15) for conducting a fuel mixture comprising primary fuel and secondary fuel from the ejector (14) to the anode section (12), a primary fuel line (16) for supplying the primary fuel to the ejector (14), and a recirculation line (17) for recirculating the secondary fuel from the anode section (16) to the ejector (14), **characterised in that** the primary fuel line (16) extends at least in sections through a heat exchange volume (18) within the recirculation line (17) for a heat-transferring connection between the secondary fuel and the primary fuel, wherein the ejector (14) has a nozzle (20) and the primary fuel line (16) extends within the heat exchange volume (18) as far as the nozzle (20).

2. Fuel cell system (10) according to claim 1, **characterised in that** the primary fuel line (16) within the heat exchange volume (18) is meander-shaped and/or curved at least in sections within the heat exchange volume (18).

3. Fuel cell system (10) according to one of the previous claims, **characterised in that** the primary fuel conduit (16) comprises a first primary fuel conduit section (35) and a second primary fuel conduit section (36), wherein the first primary fuel conduit section (35) and the second primary fuel conduit section (36) are configured for guiding the primary fuel in parallel within the at least two primary fuel conduit sections (35, 36) in the heat exchange volume (18).

4. Fuel cell system (10) according to one of the previous claims, **characterised in that** the primary fuel line (16) comprises, at least in one region of the heat exchange volume (18), a line diameter which is many times smaller than the recirculation line (17) in this region.

5. Fuel cell system (10) according to one of the previous claims, **characterised in that** the primary fuel conduit (16) within the heat exchange volume (18) comprises a counter-conduit section (19) for guiding the primary fuel in a counter-flow direction which is opposite or substantially opposite to a flow direction of the secondary fuel in the heat exchange volume (18).

6. Fuel cell system (10) according to claim 5, **characterised in that** the counter-conducting section (19) is designed to be spiral-shaped at least in sections.

7. Fuel cell system (10) according to one of the previous claims, **characterised in that** the recirculation line (17) has a recirculation line wall (21), in which a first inlet opening (22), through which the primary fuel line (16) enters the heat exchange volume (18), an outlet opening (23), through which the primary fuel line (16) emerges again from the heat exchange volume (18) into the environment of the recirculation line (17), and a second inlet opening (24), through which the primary fuel line (16) enters again into the heat exchange volume (18), are formed.

8. Fuel cell system (10) according to claim 7, **characterised in that** the primary fuel line (16) extends downstream of the outlet opening (23) and upstream of the second inlet opening (24) at least in sections in surface contact along an outer circumferential surface (25) of the recirculation line wall (21).

9. Fuel cell system (10) according to one of the claims 7 to 8, **characterised in that** the recirculation line (17) has an elbow section (26) and the primary fuel line (16) extends at least partially through the heat exchange volume (18) in the elbow section (26).

## Revendications

1. Système de pile à combustible (10) comprenant au moins un empilement de piles à combustible (11) ayant une section anodique (12) et une section cathodique (13), un éjecteur (14), un conduit de mélange de combustibles (15) pour conduire un mélange de combustibles comprenant un combustible primaire et un combustible secondaire de l'éjecteur (14) à la section anodique (12), une conduite de carburant primaire (16) pour alimenter l'éjecteur (14) en carburant primaire, et une conduite de recirculation (17) pour faire recirculer le carburant secondaire de la section anodique (16) vers l'éjecteur (14), **caractérisé en ce que** la conduite de carburant primaire (16) pour une connexion de transfert de chaleur entre le carburant secondaire et le carburant primaire s'étend au moins en partie à travers un volume d'échange de chaleur (18) à l'intérieur de la conduite de recirculation (17), dans lequel l'éjecteur (14) a une buse (20) et la conduite de carburant primaire (16) s'étend à l'intérieur du volume d'échange de chaleur (18) jusqu'à la buse (20).

2. Système de pile à combustible (10) selon la revendication 1, **caractérisé par le fait que** la conduite de carburant primaire (16) à l'intérieur du volume d'échange thermique (18) est en forme de méandre et/ou courbée au moins en sections.

3. Système de pile à combustible (10) selon l'une des revendications précédentes, **caractérisé par le fait que** le conduit de combustible primaire (16) comprend une première section de conduit de combustible primaire (35) et une deuxième section de conduit de combustible primaire (36), la première section de conduit de combustible primaire (35) et la deuxième section de conduit de combustible primaire (36) étant configurées pour guider le combustible primaire en parallèle dans les au moins deux sections de conduit de combustible primaire (35, 36) dans le volume d'échange de chaleur (18).

4. Système de pile à combustible (10) selon l'une des revendications précédentes, **caractérisé par le fait que** la conduite de carburant primaire (16) a, au moins dans une zone du volume d'échange thermique (18), un diamètre de conduite qui est plusieurs fois inférieur à celui de la conduite de recirculation (17) dans cette zone.

5. Système de pile à combustible (10) selon l'une des revendications précédentes, **caractérisé par le fait que** le conduit de combustible primaire (16) à l'intérieur du volume d'échange thermique (18) comprend une section de contre-conduit (19) pour guider le combustible primaire dans une direction de contre-courant qui est opposée ou sensiblement opposée à une direction d'écoulement du combustible secondaire dans le volume d'échange thermique (18).

6. Système de pile à combustible (10) selon la revendication 5, **caractérisé par le fait que** la section contre-conductrice (19) est conçue pour être en forme de spirale au moins en sections.

7. Système de pile à combustible (10) selon l'une des revendications précédentes, **caractérisé par le fait que** la conduite de recirculation (17) comporte une paroi de conduite de recirculation (21), dans laquelle sont formées une première ouverture d'entrée (22), par laquelle la conduite de carburant primaire (16) pénètre dans le volume d'échange thermique (18), une ouverture de sortie (23), par laquelle la conduite de carburant primaire (16) émerge à nouveau du volume d'échange thermique (18) dans l'environnement de la conduite de recirculation (17), et une seconde ouverture d'entrée (24), par laquelle la conduite de carburant primaire (16) pénètre à nouveau dans le volume d'échange thermique (18).

8. Système de pile à combustible (10) selon la revendication 7, **caractérisé par le fait que** la conduite de carburant primaire (16) s'étend en aval de l'ouverture de sortie (23) et en amont de la seconde ouverture d'entrée (24) au moins en sections en contact superficiel le long d'une surface circonférentielle extérieure (25) de la paroi de la conduite de recirculation (21).

9. Système de pile à combustible (10) selon l'une des revendications 7 à 8, **caractérisé par le fait que** la conduite de recirculation (17) comporte une section coudée (26) et la conduite de carburant primaire (16) s'étend au moins partiellement à travers le volume d'échange thermique (18) dans la section coudée (26).
